# EUROPÄISCHE PATENTSCHRIFT

(11) **EP 3 791 314 B1**
(45) Veröffentlichungstag und Bekanntmachung des Hinweises auf die Patenterteilung: **30.10.2024**
(21) Anmeldenummer: 19725272.9
(22) Anmeldetag: 06.05.2019
(51) Int. Cl.: G06V 20/56, G06V 10/82

(54) **VERFAHREN ZUR FAHRSPUR- UND FAHRBAHNDETEKTION**
METHOD FOR LANE AND ROADWAY DETECTION
PROCÉDÉ DE DÉTECTION DE VOIE ET DE ROUTE

(30) Priorität: 09.05.2018 DE 102018207313; 07.08.2018 DE 102018213191
(43) Veröffentlichungstag der Anmeldung: 17.03.2021
(73) Patentinhaber: Continental Autonomous Mobility Germany GmbH, 85057 Ingolstadt (DE)
(72) Erfinder: DAMEROW, Florian, 90411 Nürnberg (DE); FISCHER, Andreea Mirela, 90411 Nürnberg (DE); LINSENMANN, Christopher, 90411 Nürnberg (DE); IDE, Kai, 90411 Nürnberg (DE); LIMMER, Matthias, 90411 Nürnberg (DE); HEGEMANN, Stefan, 90411 Nürnberg (DE)
(74) Vertreter: Continental Corporation
(86) Internationale Anmeldenummer: PCT/DE2019/200036
(87) Internationale Veröffentlichungsnummer: WO 2019/214784

(56) Entgegenhaltungen:
- MARVIN TEICHMANN ET AL: "MultiNet: Real-time Joint Semantic Reasoning for Autonomous Driving", 8 May 2018 (2018-05-08), XP055604573, Retrieved from the Internet <URL:https://arxiv.org/pdf/1612.07695.pdf> [retrieved on 20190711]
- DAVY NEVEN ET AL: "Towards End-to-End Lane Detection: an Instance Segmentation Approach", ARXIV.ORG, CORNELL UNIVERSITY LIBRARY, 201 OLIN LIBRARY CORNELL UNIVERSITY ITHACA, NY 14853, 15 February 2018 (2018-02-15), XP081215638
- YECHENG LYU ET AL: "Road Segmentation Using CNN with GRU", ARXIV.ORG, CORNELL UNIVERSITY LIBRARY, 201 OLIN LIBRARY CORNELL UNIVERSITY ITHACA, NY 14853, 14 April 2018 (2018-04-14), XP080870760

## Beschreibung

Die Erfindung betrifft ein Verfahren zur Detektion von Fahrspuren und Fahrbahnen.

Aus dem Stand der Technik sind beispielsweise Verfahren bekannt, welche Fahrspurmarkierungen oder Fahrbahnbegrenzungen erkennen und sich daran orientieren. In bekannten Verfahren werden auch alle Fahrerassistenzfunktionen an den Fahrspurmarkierungen und/oder Fahrspurbegrenzungen ausgerichtet.

Nachteilig bei den bekannten Verfahren ist, dass diese ausschließlich die Markierungen und/oder Begrenzungen als Referenz für den Fahrspur- bzw. Fahrbahnverlauf heranziehen, wobei dies häufig zu Problemen bei fehlenden oder nicht sichtbaren Markierungen führt. Ohne richtig erkannte Markierung kann beispielsweise ein Spurhalteassistent nicht betrieben werden.

Weiterhin sind bestimmte Verfahren, wie beispielswiese die semantische Segmentierung sowie der Regressionsansatz aus dem Stand der Technik bekannt.

Semantische Segmentierung, also die pixelweise Klassifikation, ist ein oft verwendeter Ansatz mit hoher Klassifikationsperformance. Jedoch ist die Extraktion der relevanten Information, nämlich der Fahrspur-/Straßenbegrenzung, selbst aus korrekt klassifizierten Bildbereichen nicht immer einfach bzw. eindeutig möglich, da solche Systeme für gewöhnlich sichtbare Bereiche abbilden, z.B. eine Straße, nicht jedoch deren Begrenzungen, etwa den Straßenrand.

Speziell bei Vorhandensein von dynamischen Objekten wie Fahrzeugen, die Spur- oder Straßenbegrenzungen verdecken, werden letztere ausgespart, was die nachgeschaltete Extraktion der Begrenzung aus dem pixelgelabelten Bildmaterial deutlich erschwert.

Die Verwendung von Regressionsansätzen bietet die Möglichkeit, Begrenzungen direkt in parametrischer Darstellung auszugeben. Ein solcher Ansatz ist bei verdeckter oder unsicherer Begrenzung in der Lage, Zwischenwerte aus dem Bildkontext zu interpolieren.

Hierbei ist es jedoch problematisch zu erkennen, in welchen Bereichen das Netz eine korrekte Detektion liefert und in welchen Bereichen durch das Netz interpoliert wurde.

Aus der Druckschrift "Marvin Teichmann et al.: "MultiNet: Real-time Joint Semantic Reasoning for Autonomous Driving" ist die Verwendung eines Systems bestehend aus einem CNN-Encoder sowie drei nachgeordneten parallelen Decodern bekannt. Mit diesem System soll ein Ansatz zur gemeinsamen Klassifizierung, Detektion und semantischer Segmentierung über eine gemeinsame Architektur bereitstellt werden.

Es ist demnach eine Aufgabe der vorliegenden Erfindung ein Verfahren zur Fahrspur- und Fahrbahndetektion bereitzustellen, welches eine sichere Detektion von Fahrspuren und Fahrbahnen auch in schwierigen Szenarien ermöglicht.

Diese Aufgabe wird durch den Gegenstand des unabhängigen Anspruchs 1 gelöst.

Weitere vorteilhafte Ausgestaltungen und Ausführungsformen der Erfindung sind Gegenstand der Unteransprüche.

Erste Überlegungen waren dahingehend, für die sichere Detektion der Fahrspur, der eigenen sowie benachbarten Fahrspuren und des befahrbaren Straßenbereichs, ein Deep Neural Network (DNN) zu verwenden, welches auch in schwierigen Szenarien eine hohe Erkennungsrate ermöglicht. Dies beinhaltet auch die Einschätzung der Detektionskonfidenz.

Erfindungsgemäß wird ein Verfahren zur Fahrspur- und Fahrbahndetektion vorgeschlagen, wobei zur Detektion eine Multitask-DNN-Architektur verwendet wird, welche aus zumindest einem Encoder und zumindest einem ersten und einem zweiten Decoder besteht, umfassend folgende Schritte:
- Bereitstellen eines Eingangsbildes mittels einer optischen Erfassungseinrichtung,
- Filtern des Eingangsbildes mittels des Encoders,
- Erzeugen einer ersten Repräsentation durch den Encorder,
- Weiterleiten der ersten Repräsentation an den ersten und den zweiten Decoder,
- Verarbeiten der ersten Repräsentation in dem ersten und dem zweiten Decoder,
- Ausgeben zweier weiterer unterschiedlicher Repräsentationen des ersten und zweiten Decoders,
- Zusammenführen der beiden Repräsentationen des ersten und des zweiten Decoders,
- Ausgeben von erkannten Fahrspuren und Fahrspurbegrenzungen und/oder der Fahrbahn.

Bei dem Encoder handelt es sich bevorzugt um ein Convolutional Neural Network CNN. Bei dem ersten und dem zweiten Decoder kann es sich ebenfalls um ein CNN handeln. Das Eingangsbild kann ein Bild im RGB- oder YUV-Format oder auch ein Grau-Bild sein. Die erkannten Fahrspuren bzw. die erkannte Fahrbahn und die jeweiligen zugehörigen Begrenzungen können beispielsweise an ein Fahrerassistenzsystem, wie einem Spurhalteassistenten, ausgegeben werden. Denkbar wäre auch eine Verwendung der Ausgegebenen Daten für einen autonomen Fahrbetrieb.

In einer bevorzugten Ausführungsform liefert die Repräsentation des Encoders gelernte Merkmale in Form von Faltungsfiltern. Diese Faltungsfilter sind insbesondere für die Detektion von Fahrspuren relevant. Durch die Faltungsfilter ist eine Kantendetektion möglich.

Erfindungsgemäß führt der erste Decoder eine semantische Segmentierung und der zweite Decoder eine Key-Point-Regression durch. Mittels der semantischen Segmentierung wird eine freie Fläche der Fahrspur und/oder Fahrbahn ermittelt. Eine zusätzliche Key-Point-Regression detektiert die klar sichtbaren Begrenzungen der Fahrspur und/oder Fahrbahn direkt und ermöglicht die Interpolation von unsicheren oder verdeckten Begrenzungen.

Bevorzugt liefert die Repräsentation des ersten Decoders eine pixelgenaue Klassifikation des Eingangsbildes eines befahrbaren Bereichs. Bevorzugt ist der befahrbare Bereich eine Fahrbahn und/oder Fahrspur. Somit ist eine Klassifizierung in verschiedene Klassen wie Ego-Spur, linke Nachbarspur, rechte Nachbarspur, zweite linke Nachbarspur etc. sowie die Klassifizierung der gesamten befahrbaren Fahrbahn möglich. Aktuell wird für diese Ausgabe pro Klasse ein Binärbild mit dem Klassifikationsergebnis ausgegeben.

In einer bevorzugten Ausgestaltung liefert die Repräsentation des zweiten Decoders sichtbare Begrenzungen der Fahrspur und/oder der Fahrbahn als kontinuierliche Wert-Paare in Bildkoordinaten. Die Fahrspur und/oder Fahrbahnbegrenzungen werden demnach mittels sogenannter Key-Points (x_{i,} yᵢ) der Anzahl k, wobei 1<=i<=k, als kontinuierliche Wert-Paare in Bildkoordinaten ausgegeben. Hierbei erhält man eine Subpixelgenaue Ausgabe, da das CNN des zweiten Decoders im Gegensatz zum CNN des ersten Decoders einen kontinuierlichen Output in Form von Fließkommawerten bereitstellt.

Die k Key-Points, welche jeweils zwei Werte für x- und y-Position im Bild umfassen, teilen sich hierbei auf eine Approximation der linken und rechten Fahrbahnbegrenzung auf, pro Seite also k/2 Key-Points.

Die Key-Points sind hierbei in 2D-Bildkoordinaten angegeben. Der Ansatz lässt sich allerdings auch in 3D-Weltkoordinaten überführen.

Als Ergebnis des gesamten DNN sind demnach zwei unterschiedliche Repräsentationen der Fahrspuren und/oder Fahrbahn vorhanden.

Bevorzugt wird anhand der unterschiedlichen Repräsentationen des ersten und des zweiten Decoders eine Erkennungskonfidenz für die jeweilige Fahrspur- und/oder Fahrbahnbegrenzung abgeschätzt.

Anhand dieser beiden unterschiedlichen Repräsentationen liefert das DNN in sich ein gewisses Maß an Redundanz. Diese Redundanz kann dazu verwendet werden, die Erkennungskonfidenz des DNN für die jeweilige Spurbegrenzung abzuschätzen.

Je genauer die jeweilige Spur-/Straßenbegrenzung, welche durch die KeyPoint-Ausgabe des zweiten Decoders geliefert wird, den Randbereich der pixelweisen Klassifikation des ersten Decoders der Spur/Straße nachbildet, desto sicherer ist die Ausgabe des DNN und umso höher ist die Erkennungskonfidenz und eine eventuell nachgeschaltete Funktion wie etwa Spurregler kann entsprechend darauf reagieren.

Durch den gemeinsamen Encoder mit zwei getrennten Decodern für unterschiedliche Repräsentationen der Fahrspur und/oder Fahrbahn wird beim Training ermöglicht, dass im Encoder Merkmale gelernt werden, welche für beide Repräsentationen vorteilhaft sind.

Somit unterstützen sich die Repräsentationen gegenseitig beim Finden dieser Merkmale und erlauben zusätzlich eine gesteigerte Generalisierungsfähigkeit des vorgeschlagenen DNN, da die gefundenen Merkmale zwei unterschiedliche Repräsentationen beliefern müssen.

Weitere vorteilhafte Ausgestaltungen und Ausführungsformen ergeben sich aus den Figuren. Darin zeigen:
Fig. 1: eine beispielhafte Darstellung einer durch semantische Segmentierung erkannten Fahrbahn;
Fig. 2: eine schematische beispielhafte Darstellung einer Ausführungsform der Erfindung;
Fig. 3: eine weitere schematische beispielhafte Darstellung einer weiteren Ausführungsform der Erfindung;
Fig. 4: eine Darstellung einer Fahrbahn mit gemäß einer Ausführungsform der Erfindung erkannten Fahrspuren;
Fig. 5: ein schematisches Ablaufdiagramm eines erfindungsgemäßen Verfahrens.

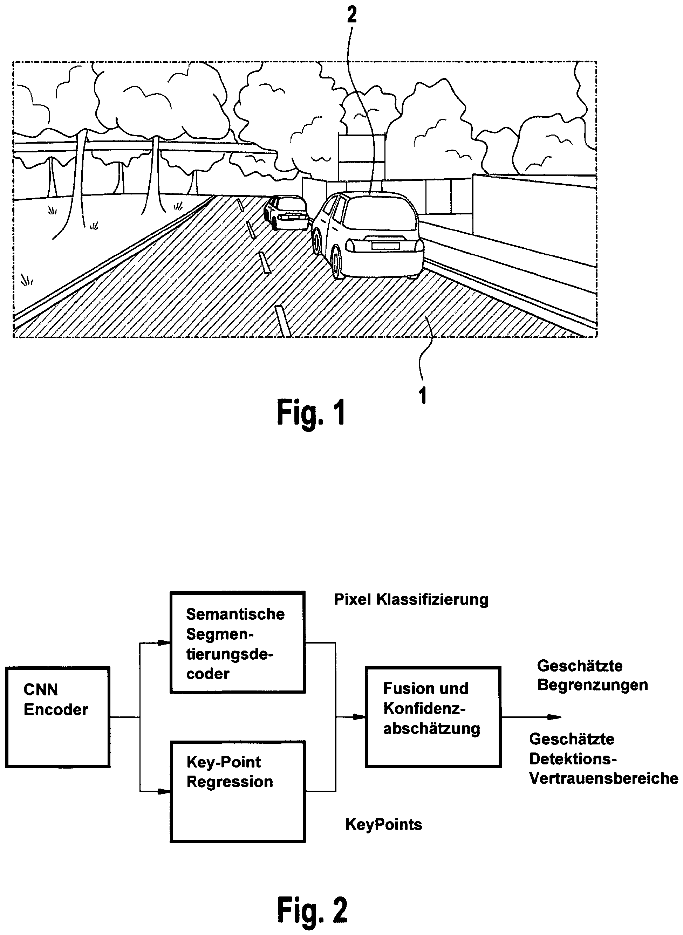

Figur 1 zeigt eine beispielhafte Darstellung einer durch semantische Segmentierung erkannten Fahrbahn 1. Hierbei ist gut erkennbar, dass die Fahrbahnbegrenzungen nicht explizit erkannt werden sondern lediglich die Fläche zwischen den Begrenzungen. Speziell bei Vorhandensein von dynamischen Objekten 2 wie beispielsweise Fahrzeugen, die Fahrspur- oder Fahrbahnbegrenzungen verdecken, werden letztere ausgespart, was die nachgeschaltete Extraktion der Begrenzung aus dem Pixelgelabelten Bildmaterial deutlich erschwert. Der rechte Straßenrand in Figur 1 ist aus pixelweiser Segmentierung nicht eindeutig extrahierbar.

Figur 2 zeigt eine schematische beispielhafte Darstellung einer Ausführungsform der Erfindung. Hierbei ist eine beispielhafte Multitask-DNN-Architektur gezeigt, welche aus einem CNN-Encoder, einem Semantic Segmentation Decoder und einem Decoder für Key-Point Regression besteht. Der Semantic Segmentation Decoder liefert als Output eine Pixel Classification und die Key-Point Regression liefert Key-Points als Output. Diese beiden Outputs werden miteinander fusioniert und es wird eine Konfidenzabschätzung durchgeführt. Durch Zusammenführen der beiden Repräsentationen ist eine Einschätzung möglich, in welchen Bereichen die Ausgabe des Netzes sicher ist, und in welchen Bereichen interpoliert wurde und/oder eine Unsicherheit in der Detektion herrscht.

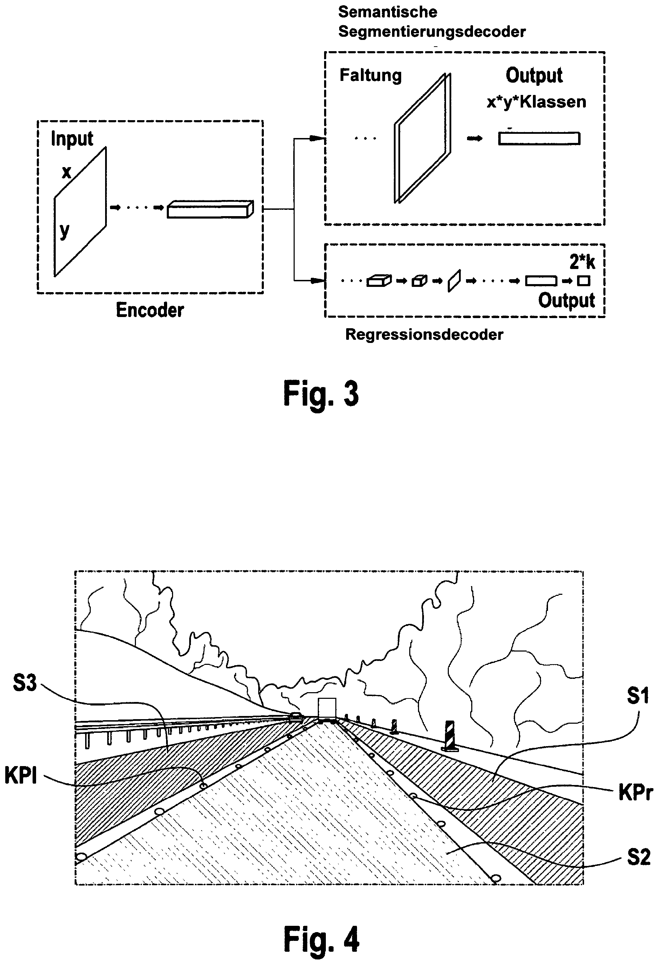

Figur 3 zeigt eine weitere schematische beispielhafte Darstellung einer weiteren Ausführungsform der Erfindung. Hier ist ein generischer Aufbau eines Deep Neural Network, DNN, gezeigt, welcher für eine sichere Detektion einer Fahrspur und benachbarten Fahrspuren sowie Fahrspur- und/oder Fahrbahnbegrenzungen verwendet werden kann. Die Bestandteile entsprechen dem Aufbau aus Figur 2.

Figur 4 zeigt eine Darstellung einer Fahrbahn 1 mit gemäß einer Ausführungsform der Erfindung erkannten Fahrspuren S1-S3. Hierbei wurde durch pixelweise Klassifikation die Fahrbahn 1 in Ego-Spur S2, linke Nachbarspur S3 und rechte Nachbarspur S1 unterteilt. Weiterhin sind für die linke und rechte Fahrspurmarkierung der Ego-Spur S2 die aus dem Key-Point Regression Decoder gelieferten Key-Points KPl, KPr gezeigt, welche zu einer Linie verbunden wurden und so die Fahrspurmarkierung darstellen. Das Bezugszeichen KPl beschreibt dabei die in Fahrtrichtung links liegenden Key-Points und das Bezugszeichen KPr die in Fahrtrichtung rechts liegenden Key-Points.

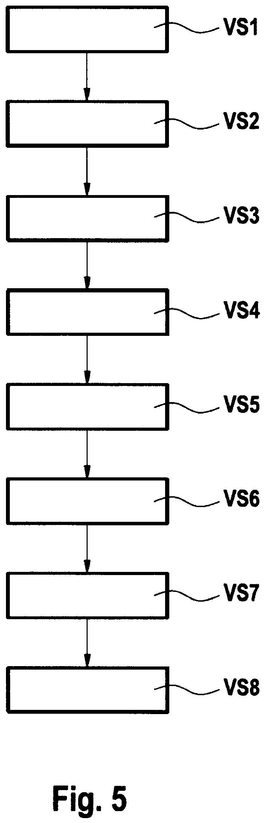

Figur 5 zeigt ein schematisches Ablaufdiagramm eines erfindungsgemäßen Verfahrens. In Verfahrensschritt VS1 wird ein Eingangsbildes mittels einer optischen Erfassungseinrichtung bereitgestellt. Dieses Eingangsbild wird in einem darauffolgenden Verfahrensschritt VS2 mittels des Encoders gefiltert. In einem weiteren Schritt VS3 wird eine erste Repräsentation der Fahrspur und/oder Fahrbahn durch den Encorder erzeugt. In Schritt VS4 wird die erste Repräsentation an den ersten und den zweiten Decoder weitergeleitet. Diese erste Repräsentation wird in Schritt VS5 in dem ersten und dem zweiten Decoder verarbeitet.

In Schritt VS6 werden zwei weitere unterschiedliche Repräsentationen des ersten und zweiten Decoders ausgegeben. In Schritt VS7 werden die beiden Repräsentationen des ersten und des zweiten Decoders zusammengeführt. In einem abschließenden Schritt VS8 werden die erkannten Fahrspuren und Fahrspurbegrenzungen sowie die Fahrbahn ausgegeben.

### Bezugszeichenliste

- 1: Fahrbahn
- 2: Objekt
- S1-S3: Fahrspuren
- KPl: Key-Points links
- KPr: Key-Points rechts
- VS1-VS8: Verfahrensschritte

## Patentansprüche

1. Verfahren zur Fahrspur (S1-S3)- und Fahrbahndetektion (1), wobei zur Detektion eine Multitask-DNN-Architektur verwendet wird, welche aus zumindest einem Encoder und zumindest einem ersten und einem zweiten Decoder besteht, umfassend folgende Schritte:
- Bereitstellen (VS1) eines Eingangsbildes mittels einer optischen Erfassungseinrichtung,
- Filtern (VS2) des Eingangsbildes mittels des Encoders,
- Erzeugen (VS3) einer ersten Repräsentation der Fahrspur (S1-S3) und/oder Fahrbahn (1) durch den Encorder,
- Weiterleiten (VS4) der ersten Repräsentation an den ersten und den zweiten Decoder,
- Verarbeiten (VS5) der ersten Repräsentation in dem ersten und dem zweiten Decoder,
- Ausgeben (VS6) zweier weiterer unterschiedlicher Repräsentationen des ersten und zweiten Decoders, wobei der erste Decoder eine semantische Segmentierung und der zweite Decoder eine Key-Point-Regression durchführt und wobei der erste Decoder eine Pixel Classification und der zweite Decoder Key-Points als Output liefert, wobei die Pixel Classification eine freie Fläche der Fahrbahn und/oder Fahrspur liefert und die Key Points sichtbare Begrenzungen der Fahrspur und/oder Fahrspur liefern,
- Zusammenführen (VS7) der beiden Repräsentationen des ersten und des zweiten Decoders, wobei beim Zusammenführen die beiden Repräsentationen fusioniert werden, und
- Ausgeben (VS8) von erkannten Fahrspuren (S1-S3) und Fahrspurbegrenzungen sowie der Fahrbahn (1).

2. Verfahren nach Anspruch 1,
wobei die Repräsentation des Encoders gelernte Merkmale in Form von Faltungsfiltern liefert.

3. Verfahren nach Anspruch 1,
wobei die Repräsentation des ersten Decoders eine pixelgenaue Klassifikation des Eingangsbildes eines befahrbaren Bereichs liefert.

4. Verfahren nach Anspruch 3,
wobei der befahrbare Bereich eine Fahrbahn (1) und/oder Fahrspur (S1-S3) ist.

5. Verfahren nach Anspruch 1,
wobei die Repräsentation des zweiten Decoders sichtbare Begrenzungen der Fahrspur (S1-S3) und/oder der Fahrbahn (1) als kontinuierliche Wert-Paare in Bildkoordinaten liefert.

6. Verfahren nach einem der vorhergehenden Ansprüche, wobei anhand der unterschiedlichen Repräsentationen des ersten und des zweiten Decoders eine Erkennungskonfidenz für die jeweilige Fahrspur- und/oder Fahrbahnbegrenzung abgeschätzt wird.

## Claims

1. Method for lane (S1-S3) detection and road (1) detection, wherein a multitask DNN architecture consisting of at least one encoder and at least a first and a second decoder is used for detection, comprising the following steps of:
- providing (VS1) an input image by means of an optical capture device,
- filtering (VS2) the input image by means of the encoder,
- generating (VS3) a first representation of the lane (S1-S3) and/or road (1) by means of the encoder,
- forwarding (VS4) the first representation to the first and second decoders,
- processing (VS5) the first representation in the first and second decoders,
- outputting (VS6) two further different representations from the first and second decoders, wherein the first decoder carries out a semantic segmentation and the second decoder carries out a key point regression, and wherein the first decoder provides a pixel classification and the second decoder provides key points as the output, wherein the pixel classification provides a free area of the road and/or lane, and the key points provide visible boundaries of the road and/or lane,
- combining (VS7) the two representations from the first and second decoders, wherein the two representations are fused when combining them, and
- outputting (VS8) identified lanes (S1-S3) and lane boundaries and the road (1).

2. Method according to Claim 1,
wherein the representation from the encoder provides learnt features in the form of convolution filters.

3. Method according to Claim 1,
wherein the representation from the first decoder provides a pixel-accurate classification of the input image of a navigable region.

4. Method according to Claim 3,
wherein the navigable region is a road (1) and/or a lane (S1-S3).

5. Method according to Claim 1,
wherein the representation from the second decoder provides visible boundaries of the lane (S1-S3) and/or of the road (1) as continuous pairs of values in image coordinates.

6. Method according to one of the preceding claims,
wherein an identification confidence for the respective lane and/or road boundary is estimated on the basis of the different representations from the first and second decoders.

## Revendications

1. Procédé de détection de voie de circulation (S1-S3) et de chaussée (1), une architecture DNN multitâche étant utilisée pour la détection, laquelle se compose d'au moins un codeur et d'au moins un premier et un deuxième décodeurs, comprenant les étapes suivantes :
- fourniture (VS1) d'une image d'entrée au moyen d'un dispositif d'acquisition optique,
- filtrage (VS2) de l'image d'entrée au moyen du codeur,
- génération (VS3) d'une première représentation de la voie de circulation (S1-S3) et/ou de la chaussée (1) par le codeur,
- transmission (VS4) de la première représentation aux premier et deuxième décodeurs,
- traitement (VS5) de la première représentation dans les premier et deuxième décodeurs,
- délivrance en sortie (VS6) de deux représentations supplémentaires différentes du premier et du deuxième décodeur, le premier décodeur effectuant une segmentation sémantique et le deuxième décodeur une régression de points clés, et le premier décodeur fournissant une classification de pixels et le deuxième décodeur des points clés en tant que sortie, la classification de pixels fournissant une surface libre de la voie de circulation et/ou de la chaussée et les points clés fournissant des délimitations visibles de la voie de circulation et/ou de la chaussée,
- fusion (VS7) des deux représentations du premier et du deuxième décodeur, les deux représentations étant fusionnées lors de la fusion, et
- délivrance en sortie (VS8) des voies de circulation (S1-S3) et des délimitations des voies de circulation reconnues ainsi que de la chaussée (1).

2. Procédé selon la revendication 1,
la représentation du codeur fournissant des caractéristiques apprises sous la forme de filtres de convolution.

3. Procédé selon la revendication 1,
la représentation du premier décodeur fournissant une classification au pixel près de l'image d'entrée d'une zone praticable.

4. Procédé selon la revendication 3,
la zone praticable étant une chaussée (1) et/ou une voie de circulation (S1-S3).

5. Procédé selon la revendication 1,
la représentation du deuxième décodeur fournissant des délimitations visibles de la voie de circulation (S1-S3) et/ou de la chaussée (1) sous la forme de paires de valeurs continues en coordonnées d'image.

6. Procédé selon l'une des revendications précédentes,
une confiance de reconnaissance pour la délimitation respective de la voie de circulation et/ou de la chaussée étant estimée à l'aide des différentes représentations du premier et du deuxième décodeur.
